# EUROPEAN PATENT SPECIFICATION

(11) **EP 4 295 074 B1**
(45) Date of publication and mention of the grant of the patent: **09.12.2026**
(21) Application number: 22756621.3
(22) Date of filing: 22.02.2022
(51) Int. Cl.: F17C 1/00, F17C 13/00, F17C 1/12, B65D 90/02

(54) **CELLULAR PRESSURE VESSEL, METHOD FOR FABRICATION AND USE THEREOF**
ZELLENFÖRMIGER DRUCKBEHÄLTER, VERFAHREN ZU SEINER HERSTELLUNG UND SEINE VERWENDUNG
RÉCIPIENT CELLULAIRE SOUS PRESSION, SON PROCÉDÉ DE FABRICATION ET SON UTILISATION

(30) Priority: 22.02.2021 NO 20210228
(43) Date of publication of application: 27.12.2023
(73) Proprietor: Lattice International AS, 1366 Lysaker (NO)
(72) Inventor: BERGAN, Pål G., 1397 Nesøya (NO)
(74) Representative: Bryn Aarflot AS
(86) International application number: PCT/NO2022/050046
(87) International publication number: WO 2022/177446

(56) References cited:
- EP-A2- 1 426 673
- WO-A1-03/072684
- DE-T2- 69 622 022
- FR-A1- 2 739 912
- FR-A1- 2 739 912
- GB-A- 2 089 014
- GB-A- 2 089 014
- GB-A- 2 121 945
- NO-B1- 323 091
- US-A- 4 946 056
- US-A1- 2019 100 099
- US-B1- 6 367 647

## Description

### Technical Field

The present invention relates to storage and transport of fluids under pressure. More specifically, the invention relates to a new pressure vessel design suited for efficient production of small and medium size tanks feasible for storage of fluids existing in both liquid and gaseous form within the tank during a condition of pressure and temperature consistent with fluid properties, such as by cryogenic liquefaction, and with external insulation on the tank, if required. Typical embodiments of the invention are fuel tanks in the transport sector for containment of fossil fuels, such as LNG and LPG, and for liquid hydrogen and liquid ammonia. Other application areas with containment of gases are also feasible. The invention also relates to methods for fabricating the tanks and use of the tanks.

### Background Art

Storage and transport of fluids that normally exist in gaseous form at ambient temperature without applying pressure can be challenging. Clearly, storage of such fluids in unpressurized, gaseous form is normally not practically feasible simply because of the volume it takes in relation to the mass and energy content. Two main, practical approaches thus exist: (1) to keep the gas in gaseous form under high pressure at ambient temperature or (2) to cool down the gas to become liquid form at atmospheric pressure or with combined cooling and pressurization. Even with good thermal insulation a gas that is liquid at atmospheric pressure during filling, will normally turn into a two-phase state with part of the fluid being converted from liquid to gas caused by heat ingress; such boil-off will results in pressure build-up unless gas is released from the containment.

For climate and environmental reasons, there is a growing need for decarbonizing the energy sector by turning to use of low carbon or no-carbon fuels. However, low carbon usually means lighter fuels that exist in gas form under normal temperature and pressure. With less relative molecular carbon content comes lower liquefaction/boiling temperature which means that best storage efficiency will be obtained with fluids at pressurized or unpressurized condition as liquid, in cryogenic or refrigerated condition. Examples of low carbon or carbon free energy carriers normally stored at low temperature are liquified natural gas (LNG, mainly CH₄) which typically liquifies at -163 °C and ammonia (NH₃) which liquifies at -33.4 °C during atmospheric pressure. The "cleanest" energy carrier is hydrogen which turns into pure water during oxidation. Unfortunately, hydrogen can be one of the most difficult gases to store. It requires extremely low cryogenic conditions with -253 °C to liquefy at atmospheric pressure. Alternatively, it may be kept as gas under extremely high pressure, such as 300 to 800 bar, during ambient temperature to provide reasonable energy content per unit volume. For comparison, the energy density of liquid hydrogen is normally more than 4 times higher than that of highly compressed hydrogen. For this reason, liquid hydrogen can be much preferred over pressurized hydrogen gas when applied in the transport sector or other applications where space comes at a premium. Very large-scale storage of hydrogen is best dealt with in liquid, cryogenic form.

Containments or tanks for pressurized fluids normally have cylindrical or spherical shape. Their ability to withstand internal pressure is provided by membrane forces in the single or doubly curved shell surface. These forces are directly proportional to the pressure inside the tank as well as to the radius of curvature. This relationship implies that the required shell wall thickness grows proportionally with pressure as well as radius whereas the thickness is inversely depending on material strength. Accordingly, the practical size in terms of radius of a cylindrical tank will be rather limited and, hence also the size, when the pressure is high, even when using materials with extreme strength, e.g. composites with high strength fibers. Typically, a pressure vessel carries only a few kilograms of hydrogen at ambient temperature and 500 bar pressure. A consequence of such pressure is that storing a significant amount of highly pressurized gas at ambient temperature will require a very large number of cylindrical pressure vessels or flasks. Unfortunately, such solutions have poor, overall space efficiency because of the cylindrical shape with wasted space between cylinders, and large batteries of cylindrical flasks require extensive piping and valve systems resulting in increased risk of leakage.

An alternative to cylinders is the so-called "lattice pressure vessels" (LPV) which are based on a rather different load carrying principle. In the LPV concept the pressure on the outer tank walls is carried by an internal, modular "lattice structure" which connect and balance pressure on opposite, outer walls. Major advantages by this concept are (1) the LPV pressure vessels are fully scalable in size without requiring increased outer wall thickness, and (2) the overall space efficiency is very high because the tank can have a prismatic or box-like shape fully flexible to utilize any surrounding storage space with one tank. LPVs are modular and have a great flexibility in terms of shape and size. They are normally made of moderately thin metal plates welded together, and they are typically suited for internal pressures ranging for 2 up to 50 bars. Cryogenic fluids, such as liquified natural gas and liquid hydrogen, should normally be stored in insulated LPVs at near dew point temperature to avoid excess pressures.

LPVs are in most cases made by steel plates welded together; this implies that there will be a plurality of weld seams. It may also be difficult to scale LPVs down to very small sizes due to space required for carrying out welding. LPVs have currently been installed and used as LNG fuel tanks in ships and new applications for liquid hydrogen storage are being developed and tested.

However, a demand still exists for tanks that are particularly favorable for small and medium size tanks, feasible for operation at ambient temperature of two-phase fluid liquid-gas but easily adaptable for cryogenic or cold fluid operation in general, and particularly feasible for use as tanks in mobile units such as vehicles, ships, trains, planes and so on, in addition to also being feasible as storage tanks.

Patent publication GB 2089014A has been identified as relevant art, but prescribes welding, not mentioning extrusion, and includes no specific teaching on wall thicknesses of the resulting pressure vessel.

### Summary of The Invention

The invention provides a Pressure vessel, comprising an outer pressure shell, thermal insulation around the outer pressure shell if the tank is for cold or cryogenic operation or warm operation compared to ambient temperature, and at least one opening for filling and emptying fluid,
a plurality of identical internal longitudinal cellular units inside the outer pressure shell and an outer longitudinal cellular unit on either side, the plurality of identical internal longitudinal cellular units numbering from two up to a larger integer, wherein the identical internal longitudinal cellular units are arranged side by side along a longitudinal direction, with a shared wall in between, each shared wall comprises one or more openings allowing fluid to migrate between the longitudinal cellular units to equalize the pressure between the identical longitudinal cellular units, wherein identical internal longitudinal cellular units means identical internal cross section dimensions, identical shared wall thickness t_{w} and length of each identical internal longitudinal cellular unit, wherein fixed ratios between dimensions and wall thicknesses provide, when external constraints and outer shell parts are excluded, a membrane stress condition without bending in the internal walls of the identical internal longitudinal cellular units,
wherein
at least the identical internal longitudinal cellular units are symmetrical about an imaginary central transverse plane crossing the shared walls at half their height, including or except for said one or more openings; The pressure vessel is distinguished in that at least some of said identical longitudinal cellular units consist of continuous solid material in one piece without welds or other joined material,
comprising upper and/or lower pressure walls between upper sides and/or lower sides of shared walls of the longitudinal cellular units, in the form of curved surfaces with radius **R,** preferably with R ≥ H/2, and width B and thickness tₛ, and/or in the form of flat outer surface and curved inner surface, and/or in the form of flat pressure walls, wherein said pressure walls are parts of the outer pressure shell.

Preferably, the pressure vessel further comprises an outer longitudinal cellular unit with outer pressure shell part on either side of the identical longitudinal cellular units, further comprising an outer pressure shell part between upper sides and between lower sides of shared walls, and end caps or end structure in either end closing said longitudinal units, wherein said end caps or end structure comprises outer pressure shell parts, wherein the shared walls have height H and the imaginary central transverse plane crosses the shared walls at height H/2, wherein the whole pressure vessel is symmetrical about the imaginary central transverse plane dividing the pressure vessel into two mirror shaped halves, including or except for said one or more openings.

**The** pressure vessel preferably is comprising an outer longitudinal cellular unit with outer pressure shell part on either side of the identical longitudinal cellular units, further comprising an outer pressure shell part between upper sides and between lower sides of shared walls, wherein said longitudinal units and pressure shell parts is consisting of continuous solid material in one piece without welds or other joined material, preferably being symmetrical about the imaginary central transverse plane and preferably being symmetrical about the central plane perpendicular to the y-axis.

Directions are relative to orientation of the pressure vessel. **If** the shared walls are vertical oriented, the imaginary central transverse plane at height H/2 through the pressure vessel is horizontal oriented and the central plane perpendicular to the y-axis is vertical oriented. The term a central plane means a plane containing a central axis of the pressure vessel, dividing the structure of the pressure vessel or the identical longitudinal cellular unit with or without outer structure into two mirror shaped halves.

Preferably, the pressure vessel, if each internal, identical longitudinal cellular unit, in an orthogonal coordinate system with x in horizontal direction and y in vertical direction, has width B in x-direction, the shared wall has height H in y-direction and thickness t_{w}, the pressure vessel further comprising an outer longitudinal cell on either side of the numerous identical longitudinal cellular units arranged side by side, each outer longitudinal cell comprises a curved outer pressure wall with curvature defined by a radius R and thickness tₛ, wherein one or both of the following geometric relationships A or B apply:
A. if the outer longitudinal cell has width R + B/2 and B/2 < R, the following ratios apply: ${\left(H/2\right)}^{2} + {\left(B/2\right)}^{2} = {R}^{2} where B / 2 < R$ (1) ${t}_{w} / {t}_{s} = B / R$ (4) and, if curved pressure shells on top and bottom of radius R are arranged between shared walls, the thickness of said curved pressure shells are tₛ
B. if the outer longitudinal cell has width R, and the shared wall between the outer longitudinal cell and the neighbor longitudinal cellular unit has thickness t_{wo}, the following ratios apply: $R = H / 2$ (5) ${t}_{wo} = {t}_{w} / 2 = {t}_{s}$ (6)

The pressure vessel is comprising upper and/or lower pressure walls between upper sides and/or lower sides of shared walls of the longitudinal cellular units, in the form of curved surfaces with radius R, preferably with R ≥ H/2, and width B and thickness tₛ, and/or in the form of flat outer surface and curved inner surface, and/or in the form of flat pressure walls, wherein said pressure walls are parts of the outer pressure shell. Furthermore, the pressure vessel preferably is comprising outer pressure shell side structure and/or outer pressure shell corner structure, with thickness tₛ = t_{w}/2 for curved side wall structure and thickness tₛₛ = t_{w}/4 for double curved side-end corner structure. Preferably, the identical longitudinal cellular units comprise closing end outer pressure shell structures, in the form of curved end structure with curvature of radius R = H/2 and thickness tₑ = t_{wo}=t_{w}/2, and/or vaulted and/or flat end structures.

The shared walls comprises one, two or more openings. Most preferably the shared walls comprises four openings, near each corner equidistant or equipositioned from each corner. Thereby pressure equalization of both gas and liquid will be efficient for any orientation of the pressure vessel, and double symmetry become possible, facilitating effective production.

In some embodiments or uses of the pressure vessel of the invention, two or more pressure vessels of the invention are preferably stacked or arranged side by-side, with the longitudinal cellular direction horizontal or vertical, with internal fluid coupled as one pressure vessel, groups of pressure vessels or individual pressure vessels. For some preferable embodiments, the stacked pressure vessel embodiments comprise identical cellular units side by side and stacked, inside an outer pressure shell, produced as a single structure as one solid continuous material in one piece, for the length L of the identical cellular units and longitudinal structure on the sides and all the pressure shell parts thereon, as a cylindrical structure of length L. Only end structure and corner structure, with outer pressure shell, and inlet/outlet, must be produced and joined to the resulting cylindrical structure of length L, for providing a complete pressure vessel.

For cold or cryogenic service embodiments, or operation with warm fluid, the pressure vessel preferably comprises insulation, for example polyurethane foam or glass bubbles, and a further pressure shell outside the insulation, further comprising a connector part for connecting a vacuum pump through the further pressure shell, for providing vacuum or near vacuum in the insulation during operation, wherein the insulation has sufficiently open void-structure for allowing vacuum or near vacuum formation and sufficient compressive strength for withstanding at least 1 bar pressure on the further pressure shell.

**The** invention also provides a method of building a pressure vessel according to the invention, comprising a plurality of identical internal longitudinal cellular units inside the outer pressure shell and an outer longitudinal cellular unit on either side.

**The** method is distinguished in that it comprises the steps:
to build said longitudinal units and/or parts of said units, by extrusion, bending of plates, deep drawing, rolling and/or other method,
unless the longitudinal units are built directly as one part, to join parts of the longitudinal units together to form said units by friction stir welding, fusion welding, solid state welding, brazing, gluing or other methods satisfying regulatory requirements,
to arrange at least one opening in each structure to become a shared wall structure, preferably one opening near each corner,
to build outer pressure shell structures,
to join said longitudinal cellular units and said outer pressure shell structures,
to arrange at least one inlet and/or outlet from outside the tank to inside the tank,
if for cold fluid operational temperature, or warm fluid operation, to arrange insulation around the tank,
if for colder operation, or warmer fluid operation, to arrange a further pressure shell outside an insulation layer and a coupling for a vacuum pump through the further pressure shell for having vacuum or near vacuum inside the insulation in operation.

The method preferably comprises the steps:
to extrude identical longitudinal cellular units with outer longitudinal cells, including outer pressure shell parts, as one solid continuous material, such as from a feasible aluminium alloy, wherein the identical longitudinal cellular units are rectangular or quadratic in cross section, preferably including curved longitudinal outer sections of radius R = H/2, with thickness tₛ of said curved sections, i.e. outer longitudinal pressure shell parts, with shares walls of thickness t_{w} and walls between the outer longitudinal cell and the neighbor longitudinal cellular unit of thickness t_{wo}, wherein t_{wo} = t_{w}/2 = tₛ
and, to fabricate and join the end structures, preferably including double curved corners with thickness tₛₛ = tₛ/2.

The invention also provides use of the pressure vessel of the invention, for containing fuel in mobile units, including drones, cars, trucks, lorries, buses, trains, ships, airplanes, helicopters and any other mobile unit that can consume the fuel for operation, or use as small or medium sized storage tanks and/or transport tanks.

If the person skilled in the art follow the guidance provided in this document, in accordance with the invention, the technical effect is membrane stress condition without bending in the internal walls of the longitudinal cellular units. This means that at least the shared walls between the longitudinal cellular units have membrane stress without bending, in this context meaning equal tensile stress over the thickness. However, deviations from the ratios of dimensions and/or wall thickness, and/or effects by internal pressure on the outer pressure shell parts, and/or external or other constraints, can provide deviations from membrane stress.

Minor deviations still providing technical and/or economic advantage over prior art pressure vessels are allowable within the scope of protection. Pressure vessel embodiments with deviations resulting in stress condition in the internal structure deviating from pure membrane stress by 10%, 7%, 5%, 3%, 2% or 1% or less can still be beneficial over prior art pressure vessels. Such allowable deviations can be the result of deviation from fixed ratios between dimensions and/or wall thicknesses from ratios as specified in the detailed description, parts of the outer pressure shell not having pure membrane stress, different outer pressure shell design between longitudinal cellular units, deviations from orthogonal oriented internal walls, or effects at corners and/or ends. Said deviations from membrane stress can be determined by numerical simulations, and whether the pressure vessel still is beneficial over prior art pressure vessels, and thereby still is according to the invention, can be found by economical modeling.

As understood by the person skilled in the art, variation from the ideal stress condition with pure membrane stress is allowable to the extent as resulting from the variations as specified above and described later. Ultimately, stresses and deformation must comply with prescriptive rules of all codes applicable for the specific use intended for the containment.

The current invention provides pressure vessels, also termed tanks, and a method of producing said tanks and pressure vessels, providing at least the following advantages:
- The invention is based on an innovative cellular structural design principle which enables high material utilization with most of the tank structure being in an ideal state of membrane stress without significant bending
- The cellular design concept is repetitive meaning that tanks of different widths can be constructed from assembly of similar, basic structural elements
- The repetitive cellular structure is the same for the full, or nearly the full, length of the tank. This means full flexibility for choosing the tank length by cutting a long cellular member into tank sections of desired length after which closing (capping) of end sections can be applied

- The above concept lends itself to very efficient production methods for the cellular cross-section member using extrusion of the entire cellular cross-section or efficient assembly and fusion of sub-sections of the cellular components
- A series of efficient production methods may be applied in the production of the cellular structure, such as by extrusion of one or several types of cellular members in accordance with the design principle outlined herein standard or by assembly of extruded or rolled beams or bent deep drawn plates that are compatible with such principle.
- There is great flexibility in prescribing cross-sectional size and shape which can be optimized for space efficiency for the intended application
- The cross-sectional geometry can be designed to sustain high pressures (such as beyond 50 bar)
- The cross-sectional dimension of the tank can be much larger than the size of the extrusion die by fusing several extruded elements together
- Welding is significantly reduced because a tank can be assembled from profiles with complex and cellular geometry
- Multiple tanks can be placed densely together to increase storage capacity beyond that of a single tank
- Smooth outer surface of the tank or multiple of tanks highly suitable for applying air filled or vacuum insulation required for cold or cryogenic operation

These are capabilities and advantages that clearly go beyond the properties of conventional cylindrical tank technology as well as the current known LPV technology.

Clearly, the application of extrusion or rolling methods as a main operation in the fabrication of the tanks lends itself mainly to large scale production since there is significant cost associated with setting up such production method and with making specific tools or parts needed for making the desired shape of the components of the tanks. By itself extrusion is a typical continuous or repetitive process. For these reasons mass production of tanks will be a target application for the invention. In this regard, interesting and important applications are found in the transportation sector, and most notably for pressurized and low temperature fuel tanks. Such applications are highly consistent with current drive for using more environmental and climate friendly fuels such as liquid, low carbon gas and liquid hydrogen. The possibilities for usage are wide, such as fuel tanks for various types of cars, trucks, machinery, trains and even airplanes. Tanks by the current invention are also advantageous by the fact that internal structure strongly reduces fluid sloshing during motion.

The invention is particularly well suited for small and moderate size tanks, such as fuel tanks and tanks for transport of fluids that can be liquid, gas-liquid or gas. Small scale tanks will typically be produced by continuous and repetitive production methods whereas medium size tanks can be made by conventional techniques for joining flat and curved members, such as friction stir welding or other solid state welding methods, or fusion welding methods, such as laser welding.

### Brief description of drawings

Figures 1-4 illustrate embodiments of a tank of the invention, in cross section.
Figure 5 illustrates end details, in longitudinal section, of a tank of the invention.
Figure 6 illustrates a tank of the invention in which the entire end sections of the cellular tank are covered by a combined cylindrical and spherical shell.
Figure 7 illustrates an example of how closed cells of a tank are connected via multiple openings in internal cell walls in a tank of the invention.
Figure 8 illustrates two types of thermal insulation that can be included if tanks of the invention are used for cooled or cryogenic fluids.
Figure 9 illustrates the principle of material extrusion.
Figure 10 illustrates how large cell cross-sections may be composed of extruded part sections.
Figure 11 illustrates how several cell tanks of the present invention may be put together as a "cluster" or "battery pack" and thereafter thermally isolated.

### Detailed description of the invention

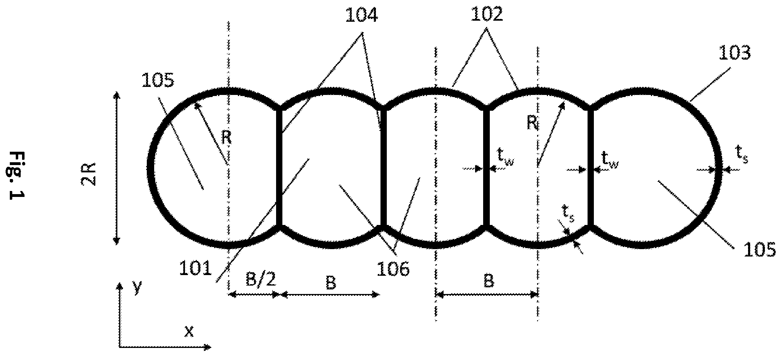

The current invention combines a particular design concept for pressure vessels with structure allowing efficient and largely automated way of fabricating such pressure vessels. Figure 1 illustrates the design principle for a cellular pressure vessel for which deformations due to internal pressure loads do not lead to internal constraining and component bending stresses at all, providing a complete pressure vessel with only membrane stress. The cross-section 101 of the pressure vessel consists of a series of internal ribs or webs or shared walls 104 that connect with outer cylindrical shell sections 102 with radius R to form a cellular structure enclosed with cylindrical shell sections 103 with similar radius R on each of the sides. The fluid holding volume is made of side cells 105, outer longitudinal cells, and internal cells 106, identical longitudinal cellular units. Note the geometrical relationship ${\left(H/2\right)}^{2} + {\left(B/2\right)}^{2} = {R}^{2} where B / 2 < R$ (1)

The key to a pure shell response without bending is that all structural parts should deform with the same deformational strain in the transverse shell direction; this means for the stresses
for the webs: ${σ}_{w} = pB / {t}_{w}$ (2)
for the shells: ${σ}_{s} = pR / {t}_{s}$ (3) where these stresses should ideally be the same and equal to the allowable design stress for the material applied. This gives a direct relationship between t_{w} and tₛ depending only on the ratio B over R ${t}_{w} / {t}_{s} = B / R$ (4)

The design stress criterion also depends on the stress σ_{z} in the longitudinal z-direction through what is normally denoted equivalent or von Mises stress. Assuming that all cells are sealed or capped and that the internal pressure thereby acts at the two ends, the cellular cross-section will also be subject to stressing in the longitudinal z-direction. With the assumption of "planar cross-sections remain planar", as in Navier's hypothesis, the longitudinal stress σ_{z} will be the same across the entire cross-section 101 and, as is the case for a cylindrical shell, σ_{z} will be about half of the shell stress σₛ and web stress σ_{w}. This means that equation (4) also applies for the design based on equivalent stress. This applies regardless of how many cells there are in the concept of 101.

Further, the cellular topology shown in Figure 1 has no external constraint in the x direction. For this reason, the actual thickness of the shells covering the interior cells is not essential since a thicker exterior wall 102 for the cells only means less deformation in the y direction. Still, the requirement of deformational compatibility for the outer cells 105 in the y direction applies with the thickness ratio between t_{w} and tₛ in accordance with equation (4) for the enclosing shells on the sides to ensure deformational compatibility in the y direction.

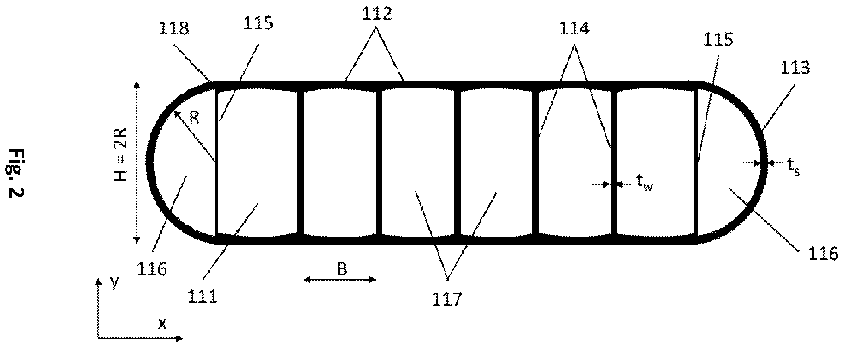

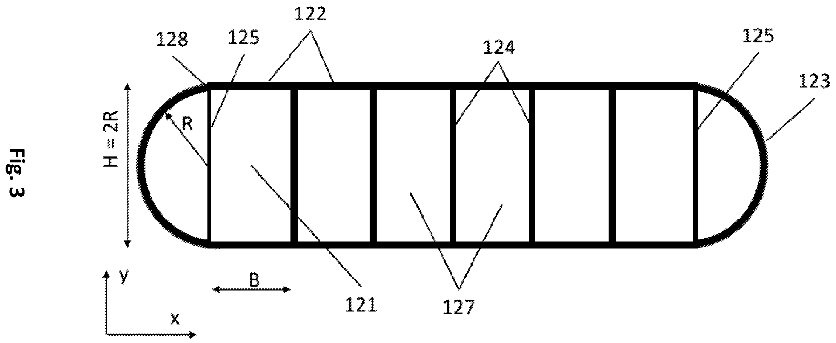

Since there is no constraint in the x direction for the cellular cross-section, the exterior thickness (and strain) in the outer walls 102 for these cells becomes unimportant. This makes it possible to replace the cylindrical wall shape 102 with a smooth, planar outside as shown in Figures 2 and 3. Figure 2 shows a cross-sectional design 111 where the interior cells 117 have an arch or vault like design with flat outer surface 112. Flat outer surfaces may be advantageous for space efficiency as well as in connection with application of external thermal insulation. Due to geometry these vault sections 112 will not be in a state of pure membrane stresses but will also be subject to bending and, hence, will have to be designed for combined membrane and bending stresses. The increased thickness required results in reduced membrane deformation for 112 walls in the y-direction. As explained, this is unproblematic since there are no external constraints in the x-direction.

Figure 3 shows a very similar design as for Figure 2, with the only difference that the outer cell walls 122 are constant thickness plates rather than of vault type. Flat plates may be less efficient from a structural point of view but may otherwise be suitable for some purposes.

The cellular designs 111 and 121 in Figures 2 and 3 differ from that of Figure 1 in another important aspect beyond the geometry of the external cell walls 112 and 122: that is the geometry of the outer side cells 116 and 126 and their connecting points 118 and 128 to the interior cells 117 and 127. The half cylinder shell walls 113 and 123 the outer cells connect fully aligned with the outer cell walls 112 and 122. It is noted that there is a fixed relationship between shell radius R for the side cells given by $R = H / 2$ (5)

By the deformational compatibility requirement, the side shells 113 and 123 should expand equally much in the y direction during internal pressure as the adjacent web plates 114 and 124 of the interior cells and as 115 and 125 of the nearest interior cells. It is noted that the length of the effective surface which is pressurized and stretching the outer webs 115 and 125 is only B/2 as compared with B for the interior webs 114 and 124. This means that the following relationship between the thickness t_{wo} of the outer webs, the thickness t_{w} of the inner webs, and the thickness tₛ of the side shells should apply ${t}_{wo} = {t}_{w} / 2 = {t}_{s}$ (6)

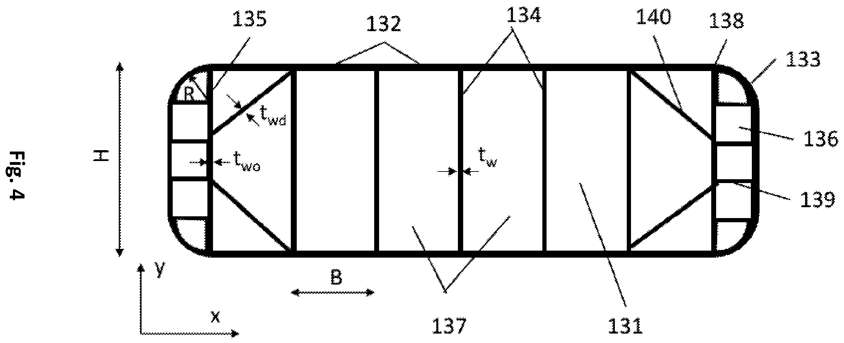

Figure 4 indicates that it is also feasible to implement flat rather than cylindrical surfaces on the sides of the cellular tank cross-section. The interior cellular structure is similar to that of Figures 1, 2 and 3 with corresponding explanation of reference numbers. The main difference lies in cellular side sections defined by cells 136 with cellular walls 135 in the y-x plane and walls 139 in the x-z plane. The corner cells 133 have quarter-cylindrical walls with radius R. Note also the possibility for applying internal strengthening walls 140 that support the cells on the sides laterally. Figure 4 primarily describes alternative designs with 4 flat side walls being based on the current principle of compatible deformational strain for the entire tank cross-section. The actual dimensioning depends on the geometry chosen and will be determined for the specific case. The topology shown in the figure is an example and is one of several design solutions that it is feasible based on the principle described herein.

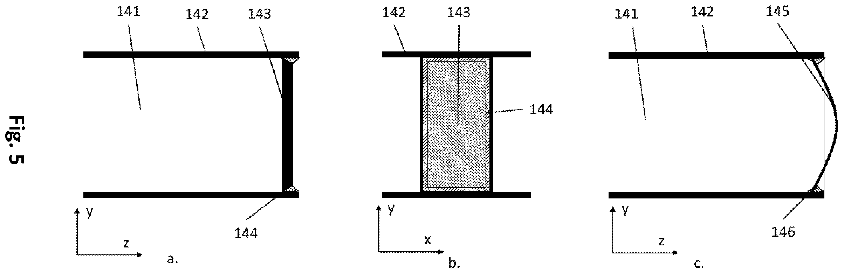

As indicated, the cellular cross-section must be completely enclosed in the front and back ends to enable holding a pressurized fluid inside to form a pressure vessel. The optimal way of doing this depends on cross-sectional geometry and tank size. Figure 5a shows longitudinal cross-section with cell 141 (corresponding to 106, 117, 127 etc.) with outer wall 142 (corresponding to 102, 112, 122) and a capping 143 applied to both ends of all cells. Figure 5 b shows a transverse view of a cell that is capped by an end plate 143. Thus, all cells are closed at both ends with end plates fitting the shape of the cell. These plates are connected to the adjacent cell walls by a suitable type of weld 144. Clearly these welds are important both for structural integrity as well as for gas tight sealing of the tank. This design results in both plate bending action and additional membrane stiffness in the plane of the end sections and such plate also constrains deformations in x and y directions at the tank ends. For this reason, the plates should preferably have moderate thickness while still being capable of carrying the internal pressure between cells. For this reason, one may choose a geometric shape for the cells with width B being significant smaller than cell height **H,** e.g. ¼ or smaller, to make this solution is feasible. An alternative to flat end plate is shown in figure 5c. Each cell is enclosed with a doubly curved shell 145, welded with a seam 146, and the shell has shape and thickness providing the same strain in the x-y plane as the strain that the cellular structure is subjected to. Hence, the deformational compatibility between shell capping and cellular structure in x and y directions is maintained. The doubly curved shell geometry shall ideally be a nearly perfect membrane type shell with geometry as if the cell opening would be covered by a "soap bubble" with air pressure on the internal side. A simple way of determining a perfect membrane shell geometry is to model the cell opening using a nonlinear (large displacement) finite element computer program with initially flat, extremely thin, shell elements that will deform and perform as pure membranes. By subjecting the finite element model to internal pressure, the surface will be as a perfectly deformed, pure membrane type shell geometry. The actual apex (max deformation) and shell thickness to be used for the actual design should be chosen in accordance with the strain compatibility condition with the connected pressurized cellular cross-section and satisfaction of allowable design stress requirement.

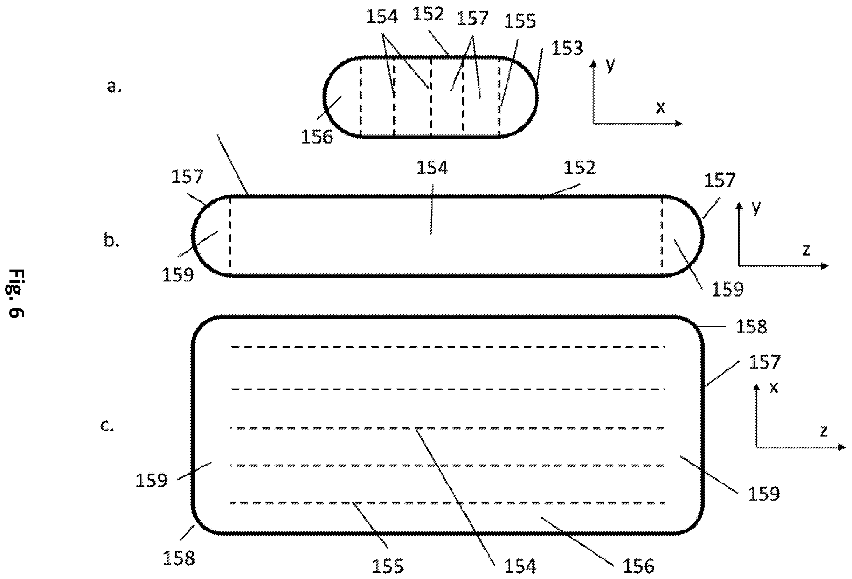

Other end cap designs can also be implemented for the proposed cellular cross-sections. Figure 6 shows a solution with a combined cylindrical and spherical end enclosure spanning the entire end sections. The radius for the cylindrical and spherical sections shall be the same as for the radius for the cellular sides in Figure 2, 3, or 4. The thickness of the cylindrical end sections 157 shall be the same as tₛ for the cylindrical side shells 153, see equations (2) and (3), and the shell will thereby be compatible with the deformational strain condition in the y-direction for the cellular cross-section corresponding to equation 6. A best deformational compatibility for the spherical corner shells 158 shall be that their thickness tₛₛ is about half of the cylindrical thickness in accordance with the strain compatibility principle; thus ${t}_{ss} = \frac{1}{2} {t}_{s} = \frac{1}{2} {t}_{wo} = \frac{1}{4} {t}_{w} or {t}_{w} = 2 {t}_{wo} = 2 {t}_{s} = 4 {t}_{ss}$ (7)

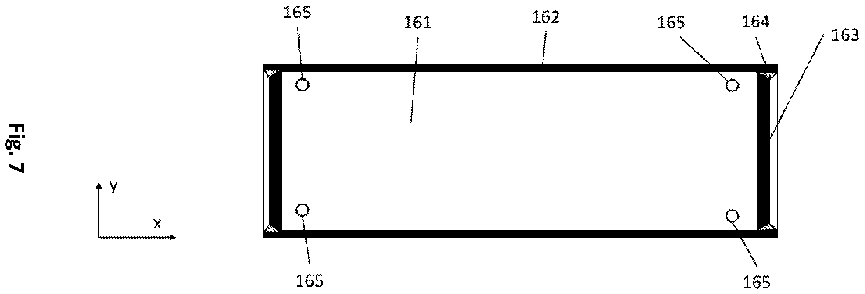

It is noted that with end capping of all cells, as shown in Figure 5, the cell space become fully enclosed and without any connection which, clearly, is not compatible with being a tank to be filled with fluid. Figure 7 shows a simple way of dealing with this problem by boring holes 165 in the separating walls 161 before applying the end capping 163. Although one hole in each internal separation wall could be enough, it is will usually be preferable to apply at least 4 holes 165 in each wall as shown in the figure to allow for connections at each end of the cells and also positioned high and low to facilitate easy flow of both liquid and gaseous phases of the internal fluid.

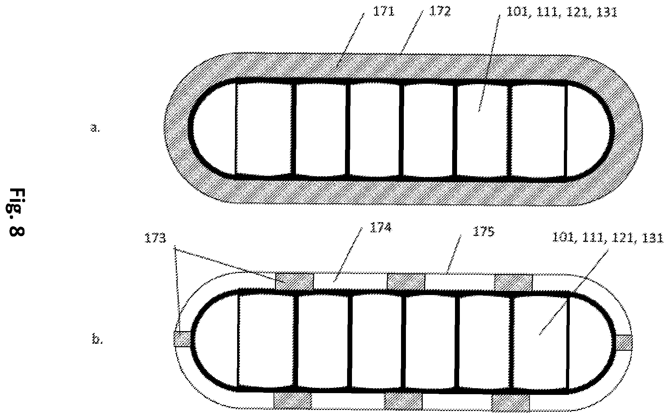

It is quite common that fluids that are gaseous at ambient temperature and atmospheric pressure are stored in liquid form after cooling; examples are liquid petroleum gas, ammonia, liquid carbon dioxide, liquified natural gas, liquid oxygen, liquid nitrogen, liquid hydrogen and so on. Clearly, in all such cases there will be need for insulating the storage tank to reduce heat ingress from the surroundings followed by rapid pressure build-up. The present pressure vessel innovation can be designed for a suitable, operational, internal pressure and can also easily be thermally insulated. Figure 8 illustrated how thermal insulation may be applied for previously illustrated cellular cross-sections such as 101, 111, 121 and 131 from Figures 1, 2, 3 and 4, respectively. Figure 8a shows air filled insulation material 171, such as poly-urethane foam, fiber insulation or perlite surrounds the cellular tank surface. The outside of the insulation is covered by a protective cladding 172, also termed a further or outer pressure shell. For gases that turn liquid only at deep cold, cryogenic conditions it may be preferable to apply vacuum or near vacuum condition by evacuating most of the air within the insulation space 171 while the cladding 172 must be completely airtight. Figure 8b shows a type of vacuum insulation wherein an airtight, outer shell 175 capable of sustaining outside atmospheric pressure is partly connected with supports 173 to the inner tank. The air in the space 174 is evacuated before the tank is put in service with cold, liquid gas.

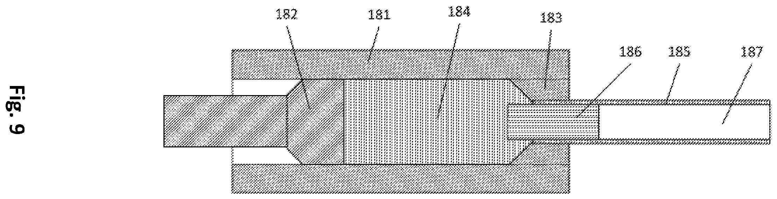

An effective way of manufacturing pressured vessels according to the invention is by material extrusion of the cellular structure by using a continuous, direct extrusion process. Among typical materials suitable for extrusion are aluminum, titanium, magnesium, and steel alloys for which extrusion forming is carried out at suitable temperature. For some applications polymers or composites may be extruded or formed otherwise according to the design principle prescribed herein. Figure 9 illustrates in a simplified way the principle of direct, continuous extrusion. The extrusion chamber 181 has a ram or piston that pushed on the material piece or billet 184 that is continuously through a die 183 to form the cross-sectional shape or profile of the extruded member 185. As will be the case for the current innovation the die must include an inserted mandrel 186 or the ram itself has extended part to forms cells 187 within the extruded member 185.

Limiting factors for continuous extrusion process of a given material is the maximum diameter of the die opening and the maximum force that the extrusion ram can exert. Accordingly, relatively small, cellular, tank cross-sections can be extruded as one piece. The process that follows includes cutting the extruded member into desired tank lengths, drilling holes for connection between neighboring cells, as in Figure 7, and applying end capping of cells, as in Figure 5, or capping the entire end sections, as in Figure 6.

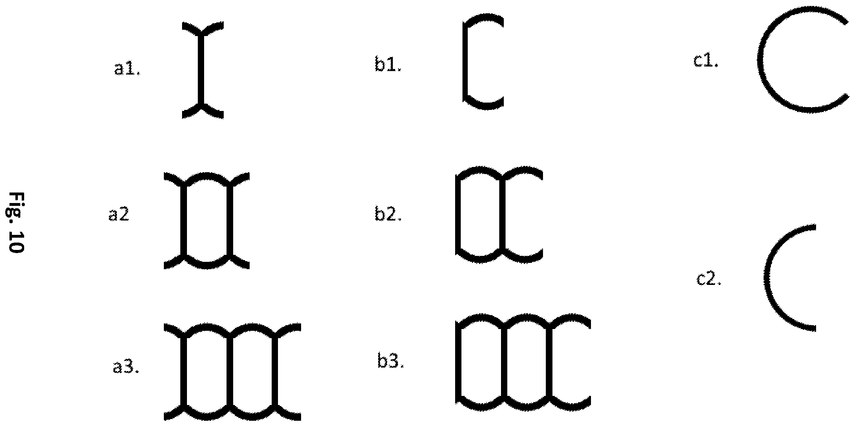

The current invention can also be produced by extrusion when larger cross-section than what is practically feasible in one cross-sectional piece. In such case the tank cross-section can be produced as an assembly of extruded member components as shown in Figure 10. Figure 10 a1, a2, and a3 illustrates cellular parts with 1, 2 or 3 webs. The figure corresponds to the design shown in Figure 1 whereas the same principle also applies to cross-sectional designs of Figure 2 and 3. Figure 10 a1 can also serve as an illustration of that the current innovation is made from standard I-shape profiles for aluminum or other types of beams. Figure 10 b1, b2 and b3 shows similar extruded sections whereas a main difference is that the joining between extruded parts will be at web intersections with outer walls rather than at the midpoint between webs. Figure 10 c1 and c2 shows cylindrical side sections that also may be extruded and connected with the cellular part in accordance with Figures 1, 2 and 3.

When a cellular cross-section is made by several extruded parts, as illustrated in Figure 10, it will be necessary to join these together to form complete tank sections such as shown in Figures 1, 2, 3 and 4. It will normally be most efficient and practical to carry out this fusion process directly on the full length of the extruded components. The process that follows thereafter will then consist of cutting the assembly into the desired lengths and thereafter apply drilling of holes and application of end caps.

Other extrusion methods may also be applied for the present innovation. One such forming method is a type of extrusion in which a billet of suitable size for the object to be formed is kept in a container with shape of the outer surface, wherein the billet is moved against a stamp or ram with form of the open cells and is pressed together to shape the end structure making half of what will be the complete tank. Two such halves will thus be fused together to form a complete, cellular tank. Alternatively, the two halves of the tank may be fabricated by way of metal or composite casting and fused together. Austenitic stainless-steel can be applied for deep drawing or plate bending, as well as being feasible for cryogenic and cold operation. Material printing is another way of producing a tank of the current invention.

There are several alternative ways of fusing or joining sections together such as by handheld or automated welding, friction stir welding, application of frictional movement and pressure, laser welding, welding with electrical clamps or rollers, heating, solid state welding, brazing, gluing etc. The current invention assumes that the appropriate way of fusing parts together is used in view of material type, tank size, reliability and quality of method, cost, etc.

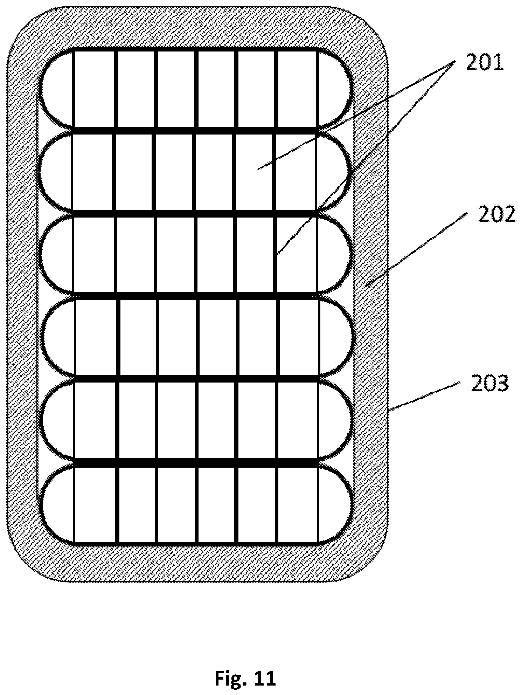

There are limits to how large tanks may be produced using extrusion according to the present innovation due to die size and pressure capacity of available production facilities. The same applies to other production methods such as casting. Despite this it will still be possible to increase the overall volumetric capacity by packing several tanks together into a "cluster" or "battery". Clearly, the possibility for putting rather flat tanks next to each other will be a preferred solution. Figure 11 shows a series of cellular tanks 201 assembled next to each other with a common outer layer of insulation 202 to form a tank cluster 203. Clearly there are piping systems, connections, valves and instruments between tanks not shown in the figure. In this way tank systems with large storage capacities may be obtained. Also, the battery pack may be configured with very little wasted space between individual tanks and with very good space utilization of the room in which the tank cluster is located. Other embodiments of the tank cluster of Figure 11 include orienting the tanks vertically, with shared walls, typically flat walls with at least one opening between vertically coupled longitudinal cellular units. Sides can be curved, or vaulted or flat pressure walls, while upper and lower pressure shell segments between shared walls can be vaulted, curved or flat pressure walls.

Aluminum is widely used for extrusion and many aluminum alloys are feasible for extrusion. In addition to "hollow" or "closed" quadratic, rectangular or hexagonal beams, and numerous open structures, extrusion can produce longitudinal cellular units, from aluminum or other metals such as Nickel steel, austenitic steels, titanium alloys, magnesium alloys, nickel based alloys and cobalt based alloys. An extendable piston included in the extrusion ram may represent a preferable tool for extrusion. An ideal welding technique, in theory at least, for welding longitudinal parts and other parts of aluminum, is solid state welding, cf WO 03/043775 A1 and further publications, since full strength can be retained. If identical, "closed" longitudinal cellular units are joined, when combining two walls of longitudinal cellular units to a shared wall, it is essential that no leakage way for fluid is left between the two original walls, whereby quality welding around the openings provided in shared walls can be essential. However, no forces, in theory, bring the two walls of the shared wall apart, and gluing or external brazing may be sufficient.

## Claims

1. Pressure vessel (101, 111), comprising an outer pressure shell (102, 103, 112, 113, 122, 123), thermal insulation (171, 173, 174) around the outer pressure shell if the tank is for cold or cryogenic operation or warm operation compared to ambient temperature, and at least one opening for filling and emptying fluid,
a plurality of identical internal longitudinal cellular units (106,117, 127, 137) inside the outer pressure shell and an outer longitudinal cellular unit on either side, the plurality of identical internal longitudinal cellular units numbering from two up to a larger integer, wherein the identical internal longitudinal cellular units are arranged side by side along a longitudinal direction, with a shared wall (104, 114, 124, 134) in between, each shared wall comprises one or more openings (165) allowing fluid to migrate between the longitudinal cellular units to equalize the pressure between the identical longitudinal cellular units, wherein identical internal longitudinal cellular units means identical internal cross section dimensions, identical shared wall thickness t_{w} and length of each identical internal longitudinal cellular unit, wherein fixed ratios between dimensions and wall thicknesses provide, when external constraints and outer shell parts are excluded, a membrane stress condition without bending in the internal walls of the identical internal longitudinal cellular units,
wherein
at least the identical internal longitudinal cellular units are symmetrical about an imaginary central transverse plane crossing the shared walls at half their height, including or except for said one or more openings;
c h a r a c t e r i s e d i n that at least some of said identical longitudinal cellular units consist of continuous solid material in one piece without welds or other joined material,
comprising upper and/or lower pressure walls between upper sides and/or lower sides of shared walls of the longitudinal cellular units, in the form of curved surfaces with radius **R,** preferably with R ≥ H/2, and width B and thickness tₛ, and/or in the form of flat outer surface and curved inner surface, and/or in the form of flat pressure walls, wherein said pressure walls are parts of the outer pressure shell.

2. Pressure vessel according to claim 1 , comprising an outer longitudinal cellular unit (105, 116, 126) with outer pressure shell part on either side (103, 113, 123, 133) of the identical internal longitudinal cellular units andouter pressure shell parts between upper sides and between lower sides of shared walls (102, 112, 122, 132), wherein said longitudinal units and pressure shell parts is consisting of continuous solid material in one piece without welds or other joined material.

3. Pressure vessel according to claim 1 or 2, being symmetrical about an imaginary central transverse plane and being symmetrical about an imaginary central vertical plane.

4. Pressure vessel according to any one of claim 1-3, wherein each internal, identical longitudinal cellular unit, in an orthogonal coordinate system with x in horizontal direction and y in vertical direction, has width B in x-direction, the shared wall has height H in y-direction and thickness t_{w}, the pressure vessel further comprising an outer longitudinal cell on either side of the numerous identical longitudinal cellular units arranged side by side, each outer longitudinal cell comprises a curved outer pressure wall with curvature defined by a radius R and thickness tₛ, wherein one or both of the following geometric relationships A or B apply:
A. if the outer longitudinal cell has width R + B/2 and B/2 < **R,** the following ratios apply: ${\left(H/2\right)}^{2} + {\left(B/2\right)}^{2} = {R}^{2} where B / 2 < R$ (1) ${t}_{w} / {t}_{s} = B / R$ (4) and, if curved pressure shells on top and bottom of radius R are arranged between shared walls, the thickness of said curved pressure shells are tₛ
B. if the outer longitudinal cell has width R, and the shared wall between the outer longitudinal cell and the neighbor longitudinal cellular unit has thickness t_{wo}, the following ratios apply: $R = H / 2$ (5) ${t}_{wo} = {t}_{w} / 2 = {t}_{s}$ (6)

5. Pressure vessel according to any one of claim 1-3, comprising outer pressure shell side structure and/or outer pressure shell corner structure, with thickness tₛ = t_{w}/2 for curved side wall structure and thickness tₛₛ = t_{w}/4 for double curved side-end corner structure..

6. Pressure vessel according to any one of claim 1-5, wherein the identical internal longitudinal cellular units comprise closing end outer pressure shell structures, in the form of curved end structure with curvature of radius R = H/2 and thickness tₑ = t_{wo}=t_{w}/2, and/or vaulted and/or flat end structures.

7. Pressure vessel according to any one of claim 1-6, wherein two or more pressure vessels of the invention are stacked or arranged side by-side, with the longitudinal cellular direction horizontal or vertical, with internal fluid coupled as one pressure vessel, groups of pressure vessels or individual pressure vessels.

8. Pressure vessel according to any one of claim 1-7, comprising insulation, for example polyurethane foam or glass bubbles, and a further pressure shell outside the insulation, further comprising a connector part for connecting a vacuum pump through the further pressure shell, for providing vacuum or near vacuum in the insulation during operation, wherein the insulation has sufficiently open void-structure for allowing vacuum or near vacuum formation and sufficient compressive strength for withstanding at least 1 bar pressure on the further pressure shell.

9. Method of building a pressure vessel according to any one of claim 1-8, comprising a plurality of identical internal longitudinal cellular units (106,117, 127, 137) inside the outer pressure shell and an outer longitudinal cellular unit on either side, **characterised** i n that the method comprises the steps:
to build said longitudinal units and/or parts of said units, by extrusion, bending of plates, deep drawing, rolling and/or other method,
unless the longitudinal units are built directly as one part, to join parts of the longitudinal units together to form said units by friction stir welding, fusion welding, solid state welding, brazing, gluing or other methods satisfying regulatory requirements,
to arrange at least one opening in each structure to become a shared wall structure, preferably one opening near each corner,
to build outer pressure shell structures,
to join said longitudinal cellular units and said outer pressure shell structures,
to arrange at least one inlet and/or outlet from outside the tank to inside the tank,
if for cold fluid operational temperature, or warm fluid operation, to arrange insulation around the tank,
if for colder operation, or warmer fluid operation, to arrange a further pressure shell outside an insulation layer and a coupling for a vacuum pump through the further pressure shell for having vacuum or near vacuum inside the insulation in operation.

10. Method according to claim 9, comprising:
to extrude identical longitudinal cellular units with outer longitudinal cells, including outer pressure shell parts, as one solid continuous material, such as from a feasible aluminium alloy, wherein the identical longitudinal cellular units are rectangular or quadratic in cross section, including curved longitudinal outer sections of radius R = H/2, with thickness tₛ of said curved sections, i.e. outer longitudinal pressure shell parts, with shared walls of thickness t_{w} and walls between the outer longitudinal cell and the neighbor longitudinal cellular unit of thickness t_{wo}, wherein t_{wo} = t_{w}/2 = tₛ
and, to fabricate and join the end structures.

11. The method according to claim 9, wherein the end structures are including double curved corners with thickness tₛₛ = tₛ/2.

12. Use of the tanks of any one of claim 1-8, for containing fuel in mobile units, including drones, cars, trucks, lorries, buses, trains, ships, airplanes, helicopters and any other mobile unit that can consume the fuel for operation, or use as small or medium sized storage tanks and/or transport tanks.

## Patentansprüche

1. Druckbehälter (101, 111), umfassend einen äußeren Druckmantel (102, 103, 112, 113, 122, 123), eine Wärmedämmung (171, 173, 174) um den äußeren Druckmantel, wenn der Tank für kalten oder kryogenen Betrieb oder warmen Betrieb im Vergleich zur Umgebungstemperatur vorgesehen ist, und mindestens eine Öffnung zum Einfüllen und Entleeren von Fluid,
eine Vielzahl identischer innerer Längszelleneinheiten (106, 117, 127, 137) innerhalb des äußeren Druckmantels und eine äußere Längszelleneinheit auf jeder Seite, wobei die Anzahl der identischen inneren Längszelleneinheiten von zwei bis zu einer größeren ganzen Zahl reicht, wobei die identischen inneren Längszelleneinheiten entlang einer Längsrichtung nebeneinander, mit einer gemeinsamen Wand (104, 114, 124, 134) dazwischen, angeordnet sind, wobei jede gemeinsame Wand eine oder mehrere Öffnungen (165) umfasst, die es Fluid erlauben, zwischen den Längszelleneinheiten zu strömen, um den Druck zwischen den identischen Längszelleneinheiten auszugleichen, wobei der Ausdruck "identische innere Längszelleneinheiten" identische innere Querschnittsabmessungen, identische gemeinsame Wanddicke t_{w} und identische Länge jeder identischen inneren Längszelleneinheit bedeutet, wobei feste Verhältnisse zwischen Abmessungen und Wanddicken einen Membranspannungszustand ohne Biegung in den Innenwänden der identischen inneren Längszelleneinheiten bereitstellen, wenn äußere Zwänge und äußere Mantelteile ausgeschlossen sind,
wobei
mindestens die identischen inneren Längszelleneinheiten symmetrisch um eine imaginäre zentrale Querebene sind, welche die gemeinsamen Wände auf ihrer halben Höhe kreuzt, unter Einbeziehung oder Ausschluss des einen oder der mehreren Öffnungen; **dadurch gekennzeichnet, dass** mindestens einige der identischen Längszelleneinheiten aus durchgehendem festem Material in einem Stück ohne Schweißnähte oder anderes zusammengefügtes Material bestehen,
umfassend obere und/oder untere Druckwände zwischen oberen Seiten und/oder unteren Seiten gemeinsamer Wände der Längszelleneinheiten, in Form gekrümmter Oberflächen mit Radius R, vorzugsweise mit R ≥ H/2, und Breite B und Dicke tₛ, und/oder in Form einer flachen Außenoberfläche und einer gekrümmten Innenoberfläche, und/oder in Form flacher Druckwände, wobei die Druckwände Teile des äußeren Druckmantels sind.

2. Druckbehälter nach Anspruch 1, umfassend eine äußere Längszelleneinheit (105, 116, 126) mit einem äußeren Druckmantelteil auf jeder Seite (103, 113, 123, 133) der identischen inneren Längszelleneinheiten und äußere Druckmantelteile zwischen oberen Seiten und zwischen unteren Seiten gemeinsamer Wände (102, 112, 122, 132), wobei die Längseinheiten und Druckmantelteile aus durchgehendem festem Material in einem Stück ohne Schweißnähte oder anderes zusammengefügtes Material bestehen.

3. Druckbehälter nach Anspruch 1 oder 2, der um eine imaginäre zentrale Querebene symmetrisch ist und um eine imaginäre zentrale Vertikalebene symmetrisch ist.

4. Druckbehälter nach einem der Ansprüche 1-3, wobei jede innere identische Längszelleneinheit in einem orthogonalen Koordinatensystem mit x in horizontaler Richtung und y in vertikaler Richtung eine Breite B in x-Richtung aufweist, wobei die gemeinsame Wand eine Höhe H in y-Richtung und eine Dicke t_{w} aufweist, der Druckbehälter weiter eine äußere Längszelle auf jeder Seite der zahlreichen identischen nebeneinander angeordneten Längszelleneinheiten umfasst, jede äußere Längszelle eine gekrümmte äußere Druckwand mit einer durch einen Radius R definierten Krümmung und einer Dicke tₛ umfasst, wobei eine oder beide der folgenden geometrischen Beziehungen A oder B gelten:
A. Wenn die äußere Längszelle die Breite R + B/2 aufweist und B/2 < R ist, gelten die folgenden Verhältnisse: ${\left(H/2\right)}^{2} + {\left(B/2\right)}^{2} = {R}^{2} wobei B / 2 < R$ (1) ${t}_{w} / {t}_{s} = B / R$ (4) und, wenn gekrümmte Druckmäntel oben und unten mit Radius R zwischen gemeinsamen Wänden angeordnet sind, sind die Dicken der gekrümmten Druckmäntel tₛ
B. wenn die äußere Längszelle die Breite R aufweist und die gemeinsame Wand zwischen der äußeren Längszelle und der benachbarten Längszelleneinheit die Dicke t_{wo} aufweist, gelten die folgenden Verhältnisse: $R = H / 2$ (5) ${t}_{wo} = {t}_{w} / 2 = {t}_{s}$ (6)

5. Druckbehälter nach einem der Ansprüche 1-3, umfassend äußere Druckmantelseitenstruktur und/oder äußere Druckmanteleckstruktur, mit einer Dicke tₛ = t_{w}/2 für gekrümmte Seitenwandstruktur und Dicke tₛₛ = t_{w}/4 für doppelt gekrümmte Seitenrand-Eckstruktur..

6. Druckbehälter nach einem der Ansprüche 1-5, wobei die identischen inneren Längszelleneinheiten abschließende Endstrukturen des äußeren Druckmantels in Form einer gekrümmten Endstruktur mit Krümmungsradius R = H/2 und Dicke tₑ = t_{wo}=t_{w}/2 und/oder gewölbter und/oder flacher Endstrukturen umfassen.

7. Druckbehälter nach einem der Ansprüche 1-6, wobei zwei oder mehr Druckbehälter der Erfindung gestapelt oder nebeneinander angeordnet sind, wobei die Längsrichtung der Zellen horizontal oder vertikal verläuft, mit internem Fluid als ein Druckbehälter, als Gruppen von Druckbehältern oder als einzelne Druckbehälter gekoppelt.

8. Druckbehälter nach einem der Ansprüche 1-7, umfassend eine Dämmung, zum Beispiel Polyurethanschaum oder Glashohlkugeln, und einen weiteren Druckmantel außerhalb der Dämmung, weiter umfassend ein Anschlussstück zum Anschließen einer Vakuumpumpe durch den weiteren Druckmantel hindurch, zum Bereitstellen von Vakuum oder annäherndem Vakuum in der Dämmung während des Betriebs, wobei die Dämmung eine ausreichend offene Hohlraumstruktur aufweist, um die Bildung von Vakuum oder annäherndem Vakuum zu ermöglichen, und eine ausreichende Druckfestigkeit, um einem Druck von mindestens 1 bar auf dem weiteren Druckmantel standzuhalten.

9. Verfahren zur Herstellung eines Druckbehälters nach einem der Ansprüche 1-8, wobei der Druckbehälter eine Vielzahl identischer innerer Längszelleneinheiten (106, 117, 127, 137) innerhalb des äußeren Druckmantels und eine äußere Längszelleneinheit auf jeder Seite umfasst, **dadurch gekennzeichnet, dass** das Verfahren die folgenden Schritte umfasst:
Herstellen der Längseinheiten und/oder von Teilen der Einheiten durch Extrusion, Biegen von Platten, Tiefziehen, Walzen und/oder ein anderes Verfahren,
sofern die Längseinheiten nicht direkt als ein Teil hergestellt werden, Zusammenfügen von Teilen der Längseinheiten zu den Einheiten durch Rührreibschweißen, Schmelzschweißen, Festkörperschweißen, Hartlöten, Kleben oder andere Verfahren, welche die regulatorischen Anforderungen erfüllen,
Anordnen mindestens einer Öffnung in jeder Struktur, die eine gemeinsame Wandstruktur bilden soll, vorzugsweise einer Öffnung nahe jeder Ecke,
Herstellen äußerer Druckmantelstrukturen,
Zusammenfügen der Längszelleneinheiten und der äußeren Druckmantelstrukturen,
Anordnen mindestens eines Einlasses und/oder Auslasses von außerhalb des Tanks in das Innere des Tanks,
falls für den Betrieb mit kalter Betriebstemperatur, oder den Betrieb mit warmer Betriebstemperatur, Anordnen einer Dämmung um den Tank herum,
falls für kälteren Betrieb oder wärmeren Fluidbetrieb, Anordnen eines weiteren Druckmantels außerhalb einer Dämmungsschicht und einer Kupplung für eine Vakuumpumpe durch den weiteren Druckmantel hindurch, um im Betrieb Vakuum oder annäherndes Vakuum im Inneren der Dämmung zu erhalten.

10. Verfahren nach Anspruch 9, umfassend:
Extrudieren identischer Längszelleneinheiten mit äußeren Längszellen, die äußere Druckmantelteile einschließen, als ein festes durchgehendes Material, beispielsweise aus einer geeigneten Aluminiumlegierung, wobei die identischen Längszelleneinheiten im Querschnitt rechteckig oder quadratisch sind, gekrümmte äußere Längsabschnitte des Radius R = H/2 einschließen, mit einer Dicke tₛ der gekrümmten Abschnitte, d. h. äußerer longitudinaler Druckmantelteile, mit gemeinsamen Wänden der Dicke t_{w} und Wänden zwischen der äußeren Längszelle und der benachbarten Längszelleneinheit mit der Dicke t_{wo}, wobei t_{wo} = t_{w} /2 = tₛ
und Fertigen und Zusammenfügen der Endstrukturen.

11. Verfahren nach Anspruch 9, wobei die Endstrukturen doppelt gekrümmte Ecken mit einer Dicke tₛₛ = tₛ/2 einschließen.

12. Verwendung der Tanks nach einem der Ansprüche 1-8, zur Aufnahme von Kraftstoff in mobilen Einheiten, einschließlich Drohnen, Autos, Lastkraftwagen, Lastwagen, Busse, Züge, Schiffe, Flugzeuge, Hubschrauber und einer beliebigen anderen mobilen Einheit, die den Kraftstoff zum Betrieb verbrauchen kann, oder zur Verwendung als kleine oder mittelgroße Lagertanks und/oder Transporttanks.

## Revendications

1. Récipient sous pression (101, 111), comprenant une coque de pression externe (102, 103, 112, 113, 122, 123), une isolation thermique (171, 173, 174) autour de la coque de pression externe si le réservoir est destiné à un fonctionnement à froid ou cryogénique ou à un fonctionnement à chaud par rapport à la température ambiante, et au moins une ouverture pour un remplissage et une vidange de fluide,
une pluralité d'unités cellulaires longitudinales internes identiques (106,117, 127, 137) à l'intérieur de la coque de pression externe et une unité cellulaire longitudinale externe de part et d'autre, la pluralité d'unités cellulaires longitudinales internes identiques étant au nombre de deux jusqu'à un nombre entier plus grand, dans lequel les unités cellulaires longitudinales internes identiques sont agencées côte à côte le long d'une direction longitudinale,
avec une paroi partagée (104, 114, 124, 134) entre elles, chaque paroi partagée comprend une ou plusieurs ouvertures (165) permettant au fluide de migrer entre les unités cellulaires longitudinales pour égaliser la pression entre les unités cellulaires longitudinales identiques, dans lequel « unités cellulaires longitudinales internes identiques » signifie des dimensions de section transversale internes identiques, une épaisseur t_{w} de paroi partagée identique et une longueur identique de chaque unité cellulaire longitudinale interne identique, dans lequel des rapports fixes entre dimensions et épaisseurs de paroi fournissent, lorsque des contraintes externes et des parties de coque externe sont exclues, un état de contrainte de membrane sans flexion dans les parois internes des unités cellulaires longitudinales internes identiques,
dans lequel
au moins les unités cellulaires longitudinales internes identiques sont symétriques par rapport à un plan transversal central imaginaire coupant les parois partagées à la moitié de leur hauteur, y compris ou à l'exception de ladite une ou plusieurs ouvertures ;
**caractérisé en ce qu'**au moins certaines desdites unités cellulaires longitudinales identiques consistent en un matériau solide continu en une seule pièce sans soudures ni autre matériau assemblé,
comprenant des parois sous pression supérieure et/ou inférieure entre des côtés supérieurs et/ou des côtés inférieurs des parois partagées des unités cellulaires longitudinales, sous la forme de surfaces courbes avec un rayon R, de préférence avec R ≥ H/2, et une largeur B et une épaisseur tₛ, et/ou sous la forme d'une surface externe plane et d'une surface interne courbe, et/ou sous la forme de parois sous pression planes, dans lequel lesdites parois sous pression sont des parties de la coque de pression externe.

2. Récipient sous pression selon la revendication 1, comprenant une cellule longitudinale externe (105, 116, 126) avec une partie de coque de pression externe de part et d'autre (103, 113, 123, 133) des unités cellulaires longitudinales internes identiques et des parties de coque de pression externe entre des côtés supérieurs et entre des côtés inférieurs des parois partagées (102, 112, 122, 132), dans lequel lesdites unités longitudinales et parties de coque de pression consistent en un matériau solide continu en une seule pièce sans soudures ni autre matériau assemblé.

3. Récipient sous pression selon la revendication 1 ou la revendication 2, étant symétrique par rapport à un plan transversal central imaginaire et étant symétrique par rapport à un plan vertical central imaginaire.

4. Récipient sous pression selon l'une quelconque des revendications 1 à 3, dans lequel chaque unité cellulaire longitudinale interne identique, dans un système de coordonnées orthogonales avec x dans la direction horizontale et y dans la direction verticale, présente une largeur B dans la direction x, la paroi partagée présente une hauteur H dans la direction y et une épaisseur t_{w}, le récipient sous pression comprenant en outre une cellule longitudinale externe de part et d'autre des nombreuses unités cellulaires longitudinales identiques agencées côte à côte, chaque cellule longitudinale externe comprend une paroi sous pression externe courbe avec une courbure définie par un rayon R et une épaisseur tₛ, dans lequel l'une ou les deux relations parmi les relations géométriques suivantes A ou B s'appliquent :
A. si la cellule longitudinale externe présente une largeur R + B/2 et B/2 < R, les rapports suivants s'appliquent : ${\left(H/2\right)}^{2} + {\left(B/2\right)}^{2} = {R}^{2} où B / 2 < R$ (1) ${t}_{w} / {t}_{s} = B / R$ (4) et, si des coques de pression courbes en haut et en bas de rayon R sont agencées entre des parois partagées, l'épaisseur desdites coques de pression courbes est tₛ
B. si la cellule longitudinale externe présente une largeur R, et la paroi partagée entre la cellule longitudinale externe et l'unité cellulaire longitudinale voisine présente une épaisseur t_{wo}, les rapports suivants s'appliquent : $R = H / 2$ (5) ${t}_{wo} = {t}_{w} / 2 = {t}_{s}$ (6)

5. Récipient sous pression selon l'une quelconque des revendications 1 à 3, comprenant une structure latérale de coque de pression externe et/ou une structure d'angle de coque de pression externe, avec une épaisseur tₛ = t_{w}/2 pour une structure de paroi latérale courbe et une épaisseur tₛₛ = t_{w}/4 pour une structure d'angle latérale d'extrémité à double courbure.

6. Récipient sous pression selon l'une quelconque des revendications 1 à 5, dans lequel les unités cellulaires longitudinales internes identiques comprennent des structures d'extrémité de fermeture de coque de pression externe, sous la forme d'une structure d'extrémité courbe avec une courbure de rayon R = H/2 et une épaisseur tₑ = t_{wo}=t_{w}/2, et/ou des structures d'extrémité voûtées et/ou planes.

7. Récipient sous pression selon l'une quelconque des revendications 1 à 6, dans lequel au moins deux récipients sous pression de l'invention sont empilés ou agencés côte à côte, avec la direction cellulaire longitudinale horizontale ou verticale, avec le fluide interne couplé en tant qu'un seul récipient sous pression, groupes de récipients sous pression ou récipients sous pression individuels.

8. Récipient sous pression selon l'une quelconque des revendications 1 à 7, comprenant une isolation, par exemple de la mousse de polyuréthane ou des bulles de verre, et une coque de pression supplémentaire à l'extérieur de l'isolation, comprenant en outre une pièce de raccordement destinée à raccorder une pompe à vide à travers la coque de pression supplémentaire, pour fournir un vide ou quasi-vide dans l'isolation pendant le fonctionnement, dans lequel l'isolation présente une structure de vides suffisamment ouverte pour permettre la formation d'un vide ou quasi-vide et une résistance à la compression suffisante pour résister à au moins 1 bar de pression sur la coque de pression supplémentaire.

9. Procédé de fabrication d'un récipient sous pression selon l'une quelconque des revendications 1 à 8, comprenant une pluralité d'unités cellulaires longitudinales internes identiques (106,117, 127, 137) à l'intérieur de la coque de pression externe et une unité cellulaire longitudinale externe de part et d'autre, **caractérisé en ce que** le procédé comprend les étapes consistant à :
fabriquer lesdites unités longitudinales et/ou des parties desdites unités, par extrusion, pliage de plaques, emboutissage profond, laminage et/ou autre procédé,
à moins que les unités longitudinales ne soient fabriquées directement comme une seule partie, assembler des parties des unités longitudinales ensemble pour former lesdites unités par soudage par friction-malaxage, soudage par fusion, soudage à l'état solide, brasage, collage ou autres procédés satisfaisant aux exigences réglementaires,
agencer au moins une ouverture dans chaque structure pour devenir une structure de paroi partagée, de préférence une ouverture près de chaque angle,
fabriquer des structures de coque de pression externe,
assembler lesdites unités cellulaires longitudinales et lesdites structures de coque de pression externe,
agencer au moins une entrée et/ou sortie depuis l'extérieur du réservoir vers l'intérieur du réservoir,
si pour une température de fonctionnement de fluide froid, ou un fonctionnement à fluide chaud, agencer une isolation autour du réservoir,
si pour un fonctionnement plus froid, ou un fonctionnement à fluide plus chaud, agencer une coque de pression supplémentaire à l'extérieur d'une couche d'isolation et un couplage pour une pompe à vide à travers la coque de pression supplémentaire pour présenter un vide ou quasi-vide à l'intérieur de l'isolation en fonctionnement.

10. Procédé selon la revendication 9, comprenant :
extruder des unités cellulaires longitudinales identiques avec des cellules longitudinales externes, y compris des parties de coque de pression externe, comme un matériau solide continu unique, par exemple à partir d'un alliage d'aluminium réalisable, dans lequel les unités cellulaires longitudinales identiques sont rectangulaires ou quadratiques en section transversale, y compris des sections externes longitudinales courbes de rayon R = H/2, avec l'épaisseur tₛ desdites sections courbes, c'est-à-dire des parties longitudinales externes de coque de pression, avec des parois partagées d'épaisseur t_{w} et des parois entre la cellule longitudinale externe et l'unité cellulaire longitudinale voisine d'épaisseur t_{wo}, dans lequel t_{wo} = t_{w} /2 = tₛ
et, fabriquer et assembler les structures d'extrémité.

11. Procédé selon la revendication 9, dans lequel les structures d'extrémité incluent des angles à double courbure d'épaisseur tₛₛ = tₛ/2.

12. Utilisation des réservoirs selon l'une quelconque des revendications 1 à 8, pour contenir du carburant dans des unités mobiles, y compris des drones, voitures, camions, poids lourds, autobus, trains, navires, avions, hélicoptères et toute autre unité mobile pouvant consommer le carburant pour le fonctionnement, ou une utilisation en tant que réservoirs de stockage de petite ou moyenne taille et/ou réservoirs de transport.
